# EUROPÄISCHE PATENTSCHRIFT

(11) **EP 1 529 806 B1**
(45) Veröffentlichungstag und Bekanntmachung des Hinweises auf die Patenterteilung: **16.08.2006**
(21) Anmeldenummer: 03025180.5
(22) Anmeldetag: 04.11.2003
(51) Int. Cl.: C08L 9/00, C08L 7/00, C08K 3/04, C08K 3/36, C08K 5/00

(54) **Kautschukmischung und Reifen**
Rubber composition and tyres
Composition de caoutchouc et pneus

(43) Veröffentlichungstag der Anmeldung: 11.05.2005
(73) Patentinhaber: Continental Aktiengesellschaft, 30165 Hannover (DE)
(72) Erfinder: Appel, Andrea, Dr., 30177 Hannover (DE); Dettmer, Fabian, Dr., 38106 Braunschweig (DE); Söhnen, Dietmar, Dr., 31867 Lauenau (DE); Wagemann, Jürgen, Dr., 31162 Bad Salzdetfurth (DE)

(56) Entgegenhaltungen:
- EP-A- 0 708 137
- EP-A- 1 179 560
- DE-A- 3 804 908

## Beschreibung

Die Erfindung betrifft eine schwefelvernetzbare Kautschukmischung, insbesondere für Laufstreifen von Reifen, enthaltend zumindest einen Dienkautschuk, zumindest einen polaren Füllstoff und Ruß. Die Erfindung betrifft ferner einen Reifen, dessen mit der Fahrbahn in Berührung kommender Teil des Laufstreifens zumindest zum Teil aus der mit Schwefel vulkanisierten Kautschukmischung besteht.

Da die Fahreigenschaften eines Reifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich.

Um diese Zielkonflikte zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.

Aus der EP-A-1 052 270 sind z. B. Laufstreifenmischungen bekannt, die für einen guten Griff auf Eis unter anderem ein flüssiges Polymer, z. B. Polybutadien, enthalten. Aus der DE 38 04 908 A1 sind ebenfalls Laufstreifenmischungen bekannt, die für gute Wintereigenschaften flüssiges Polybutadien enthalten. Flüssiges Polybutadien mit hohem Vinylgehalt wird auch in der EP-A-1 035 164 für Reifenlaufstreifen als Ersatz für herkömmliche Weichmacheröle vorgeschlagen. Die Verwendung von flüssigem Polybutadien in herkömmlichen Mischungen wirkt sich allerdings sehr negativ auf das Trockenbremsen von Reifen aus.

Der vorliegenden Erfindung liegt nun die Aufgabe zugrunde, Kautschukmischungen für Laufstreifen von Reifen bereitzustellen, die bei den Reifen ein gutes Abriebverhalten, guten Nassgriff und eine gute Traktion auf Eis und Schnee bei gleichzeitig gutem Trockenbremsen bewirken. Für diese Eigenschaften soll ein besonders hohes Gesamtniveau erzielt werden.

Gelöst wird diese Aufgabe erfindungsgemäß dadurch, dass die Kautschukmischung
- zumindest einen Dienkautschuk,
- flüssiges Polybutadien mit einem Molekulargewicht von 1500 - 10000 g/mol und einem Vinylgehalt von 15 - 50 %,
- zumindest einen polaren Füllstoff,
- zumindest einen Hochstrukturruß mit einer Iodadsorptionszahl von 115 - 200 g/kg und einer DBP-Zahl von 125 - 160 mL/100 g und
- zumindest ein Glycerid und/oder ein Faktis enthält.

Überraschenderweise wurde gefunden, dass durch die spezielle Kombination von flüssigem Polybutadien mit Hochstrukturruß und Glycerid und/oder Faktis in füllstoffhaltigen Dienkautschukmischungen der Nachteil der Verschlechterung des Trockenbremsens, der üblicherweise durch die Zudosierung von flüssigem Polybutadien in der Mischungen auftritt, vollständig kompensiert wird. Die anderen genannten Reifeneigenschaften bleiben dabei auf hohem Niveau.

Die schwefelvernetzbare Kautschukmischung enthält zumindest einen Dienkautschuk, wobei in Sinne der Anmeldung flüssiges Polybutadien nicht zu den Dienkautschuken gezählt werden soll. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (40-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die Kautschukmischung enthält flüssiges Polybutadien mit einem Molekulargewicht von 1500 - 10000 g/mol und einem Vinylgehalt von 15 - 50 %. Bevorzugt wird flüssiges Polybutadien mit einem Molekulargewicht von 2000 - 5000 g/mol und einem Vinylgehalt von 20 - 35 %, z. B. Ricon® 130, Ricon Resins Inc., USA, eingesetzt. Mit derartigem flüssigem Polybutadien wird ein besonders gutes Abriebverhalten bei guten Wintereigenschaften erzielt. Das flüssige Polybutadien wirkt gleichzeitig viskositätssenkend, so dass die Menge an anderen Weichmachern reduziert werden kann.

Das flüssige Polybutadien wird vorzugsweise in Mengen von 10 - 50 Gewichtsteilen, besonders bevorzugt in Mengen von 15-30 Gewichtsteilen, pro 100 Gewichtsteile des bzw. der Dienkautschuk(e), ausgewählt aus der Gruppe bestehend aus Naturkautschuk, synthetischem Polyisopren, Polybutadien und Styrol-Butadien-Copolymer, eingesetzt, um eine optimale Wirkung hinsichtlich aller Reifeneigenschaften bei angemessenem Preis zu erzielen.

Die Kautschukmischung enthält zumindest einen polaren Füllstoff. Als polare Füllstoffe können alle dem Fachmann bekannten Füllstoffe, wie Aluminiumhydroxid und Schichtsilikate, verwendet werden. Bevorzugt wird als polarer Füllstoff jedoch Kieselsäure eingesetzt, wobei das Gewichtsverhältnis von Kieselsäure zu Hochstrukturruß in der Mischung 10:1 bis 1:2 beträgt. Die Kieselsäure kann in Mengen von 20 - 110 Gewichtsteilen, vorzugsweise in Mengen von 70 - 90 Gewichtsteilen, pro 100 Gewichtsteile des bzw. der Dienkautschuk(e), ausgewählt aus der Gruppe bestehend aus Naturkautschuk, synthetischem Polyisopren, Polybutadien und Styrol-Butadien-Copolymer, eingesetzt werden. Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 120 bis 285 m²/g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs VN3 (Handelsname) der Firma Degussa als auch hoch dispergierte Kieselsäuren, so genannte HD-Kieselsäuren (z. B. Ultrasil 7000 der Firma Degussa), zum Einsatz kommen.

Zur Verbesserung der Verarbeitbarkeit und zur Anbindung des polaren Füllstoffes, insbesondere der Kieselsäure, an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuke erfolgen kann.

Die erfindungsgemäße Kautschukmischung enthält zumindest einen Hochstrukturruß mit einer Iodadsorptionszahl (gemäß ASTM D 1510) von 115 - 200 g/kg und einer DBP-Zahl (gemäß ASTM D 2414) von 125 - 160 mL/100 g. Es kann z. B. ein Ruß das Typs HV 3396, Columbian Chemicals Company, USA eingesetzt werden.

Der Mischung werden bevorzugt 10 - 70 Gewichtsteile, besonders bevorzugt 10 - 20 Gewichtsteile Hochstrukturruß pro 100 Gewichtsteile des bzw. der Dienkautschuk(e), ausgewählt aus der Gruppe bestehend aus Naturkautschuk, synthetischem Polyisopren, Polybutadien und Styrol-Butadien-Copolymer, zudosiert, um ein besonders gutes Trockenbremsverhalten bei Reifen zu erreichen.

Die erfindungsgemäße Kautschukmischung enthält ferner zumindest ein Glycerid (Ester des Glycerins) und/oder ein Faktis. Diese Substanzen wirken als Weichmacher und können übliche Weichmacher in der Mischung ganz oder teilweise ersetzen. Als Glyceride können natürliche Triglyceride pflanzlichen oder tierischen Ursprungs verwendet werden, die umweltfreundlich sind. Faktisse sind Umsetzungsprodukte bzw. Vernetzungsprodukte ungesättigter tierischer, pflanzlicher oder synthetischer Öle (z. B. Rapsöl oder Rizinusöl) mit Schwefel, Schwefelwasserstoff, Dischwefelchlorid, Siliciumtetrachlorid oder Diisocyanat. Für weitere Einzelheiten sei beispielhaft auf J. Schnetger, Lexikon der Kautschuk-Technik, Hüthig Buch Verlag, 2. Aufl., Heidelberg, 1991 verwiesen.

Gemäß einer vorteilhaften Weiterbildung der Erfindung weist die Mischung als Glycerid preiswertes und gut verarbeitbares Rapsöl in einer Menge von 5 - 10 Gewichtsteilen pro 100 Gewichtsteile des bzw. der Dienkautschuk(e), ausgewählt aus der Gruppe bestehend aus Naturkautschuk, synthetischem Polyisopren, Polybutadien und Styrol-Butadien-Copolymer, auf.

Eine bevorzugt eingesetzte Mischung für ein besonders hohes Niveau der Reifeneigenschaften "Abrieb", "Trocken- und Nassbremsen" und "Traktion auf Eis und Schnee" enthält
- 10 - 80 Gewichtsteile Naturkautschuk,
- 0-70 Gewichtsteile Polybutadien,
- 0 - 80 Gewichtsteile lösungspolymerisiertes Styrol-Butadien-Copolymer,
- 10 - 50 Gewichtsteile flüssiges Polybutadien,
- 20 - 110 Gewichtsteile Kieselsäure,
- 10-70 Gewichtsteile Hochstrukturruß und
- 5 - 20 Gewichtsteile Rapsöl enthält,
wobei sich die Gewichtsteile von Naturkautschuk, Polybutadien und lösungspolymerisiertem Styrol-Butadien-Copolymer zu 100 addieren.

Die Kautschukmischung kann außer den genannten Substanzen noch andere Zusatzstoffe, z. B. Füllstoffe, wie beispielsweise Alumosilicate, Kreide, Stärke, Magnesiumoxid, Titandioxid oder Kautschukgele, und weitere Weichmacher, wie z. B. aromatische, naphthenische oder paraffinische Mineralölweichmacher (z. B. MES (mild extraction solvate) oder TDAE (treated distillate aromatic extract)), aufweisen.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Harze und Mastikationshilfsmittel, wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.
Je nach verwendeter Menge an flüssigem Polybutadien kann es angebracht sein, die Menge des Vulkanisationssystems aus Schwefel und vulkanisationsbeeinflussender Substanz anzupassen, da das flüssige Polybutadien z. T. irreversibel in die Matrix eingebunden wird.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Nach der Vulkanisation des Fahrzeugreifens weist der Reifen ein gutes Abriebverhalten, guten Nassgriff und eine gute Traktion auf Eis und Schnee bei gleichzeitig gutem Trockenbremsen auf. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von Vergleichs- und Ausführungsbeispielen, die in den Tabellen 1 bis 3 zusammengefasst sind, näher erläutert werden.

Die Vergleichsmischungen sind mit V gekennzeichnet, die erfindungsgemäße Mischung ist mit E gekennzeichnet. Die Mischungen 1 bis 6 unterscheiden sich nur in Art und Menge der folgenden Substanzen: flüssiges Polybutadien, Ruß, Weichmacheröl und Rapsöl. In den Mischungen mit flüssigem Polybutadien wurde die Menge an weichmachenden Ölen im Vergleich zu den Mischungen 1 und 2 gesenkt, da bereits das flüssige Polybutadien viskositätssenkend wirkt.

**Tabelle 1**

| **Bestandteile** | **Einheit** | **1(V)** | **2(V** | **3(V)** | **4(V** | **5(V** | **6(E** |
|---|---|---|---|---|---|---|---|
| Naturkautschuk | Gew.-teile | 30 | 30 | 30 | 30 | 30 | 30 |
| BR^{a} | Gew.-teile | 40 | 40 | 40 | 40 | 40 | 40 |
| S-SBR^{b} | Gew.-teile | 30 | 30 | 30 | 30 | 30 | 30 |
| Flüss. Polybutadien^{c} | Gew.-teile | - | - | 20 | 20 | 20 | 20 |
| Ruß N339 | Gew.-teile | 14 | - | 14 | - | 14 | - |
| Ruß HV3396 | Gew.-teile | - | 14 | - | 14 | - | 14 |
| Kieselsäure^{d} | Gew.-teile | 87 | 87 | 87 | 87 | 87 | 87 |
| Weichmacheröl | Gew.-teile | 42 | 42 | 22 | 22 | 12 | 12 |
| Rapsöl | Gew.-teile | - | - | - | - | 10 | 10 |
| Alterungsschutzmittel | Gew.-teile | 6 | 6 | 6 | 6 | 6 | 6 |
| Zinkoxid | Gew.-teile | 5 | 5 | 5 | 5 | 5 | 5 |
| Stearinsäure | Gew.-teile | 2 | 2 | 2 | 2 | 2 | 2 |
| Verarbeitungshilfsmittel | Gew.-teile | 5 | 5 | 5 | 5 | 5 | 5 |
| Silan-Kupplungsagens | Gew.-teile | 6 | 6 | 6 | 6 | 6 | 6 |
| Beschleuniger | Gew.-teile | 4 | 4 | 4 | 4 | 4 | 4 |
| Schwefel | Gew.-teile | 1,5 | 1,5 | 1,5 | 1,5 | 1,5 | 1,5 |

| | | | | | | | |
|---|---|---|---|---|---|---|---|
| ^{a} High-cis Polybutadien | | | | | | | |
| ^{b} lösungspolymerisiertes Styrol-Butadien-Copolymer, VSL-5025, Bayer AG, Deutschland | | | | | | | |
| ^{c} Molekulargewicht: 2500 g/mol, Vinylgehalt: 20-35 %, Ricon® 130, Ricon Resins Inc, USA | | | | | | | |
| ^{d} Silika VN 3, Degussa, Deutschland | | | | | | | |

Die Mischungsherstellung erfolgte unter üblichen Bedingungen in zwei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften bestimmt, die in der Tabelle 2 aufgelistet sind. Für die Tests an Prüfkörpern wurden folgende Testverfahren angewandt:
- Zugfestigkeit bei Raumtemperatur gemäß DIN 53 504
- Reißdehnung bei Raumtemperatur gemäß DIN 53 504
- Spannungswerte bei 100, 200 und 300 % Dehnung bei Raumtemperatur gemäß DIN 53 504
- Bruchenergiedichte bestimmt im Zugversuch nach DIN 53 504, wobei die Bruchenergiedichte die bis zum Bruch erforderliche Arbeit, bezogen auf das Volumen der Probe, ist
- Shore-A-Härte bei Raumtemperatur und 70 °C gemäß DIN 53 505
- Rückprallelastizität bei Raumtemperatur und 70 °C gemäß DIN 53 512

**Tabelle 2**

| **Eigenschaften** | **Einheit** | **1(V)** | **2(V)** | **3(V)** | **4(V)** | **5(V)** | **6(E)** |
|---|---|---|---|---|---|---|---|
| Zugfestigkeit bei RT | MPa | 13,9 | 13,7 | 14,1 | 13,9 | 14,7 | 13,5 |
| Reißdehnung bei RT | % | 615 | 670 | 682 | 571 | 590 | 593 |
| Spannungswert 100 % | MPa | 1,55 | 1,40 | 1,47 | 1,42 | 1,78 | 1,68 |
| Spannungswert 200 % | MPa | 3,57 | 3,08 | 3,34 | 3,10 | 4,08 | 3,78 |
| Spannungswert 300 % | MPa | 6,22 | 5,45 | 6,11 | 5,60 | 7,01 | 6,47 |
| Bruchenergiedichte | J/cm³ | 35,3 | 37,9 | 39,4 | 32,8 | 36,2 | 33,5 |
| Shore-A-Härte bei RT | Shore A | 60,1 | 61,4 | 59,1 | 60,9 | 58,5 | 60,3 |
| Shore-A-Härte bei 70 °C | Shore A | 56,1 | 57,3 | 54,4 | 57,0 | 54,1 | 56,1 |
| Rückprallelastizität bei RT | % | 32,1 | 30,4 | 32,7 | 30,7 | 32,3 | 31,2 |
| Rückprallelastizität bei 70 °C | % | 44,4 | 41,5 | 41,5 | 43,7 | 42,9 | 42,7 |

Ferner wurden Fahrzeugluftreifen der Dimension 205/55 R16 mit einer Laufstreifencap aus den in der Tabelle 1 aufgeführten Mischungen hergestellt und mit den Reifen Versuche zum Nassbremsen auf Asphalt und Beton sowie zum Trockenbremsen als auch zum Bremsen auf Schnee und Eis durchgeführt. Ferner wurde der Abrieb gemessen. Die Reifeneigenschaften des Reifens mit der Mischung 1 wurden gleich 100 gesetzt, Werte größer als 100 bedeuten eine Verbesserung in der entsprechenden Eigenschaft (rating). Die Ergebnisse der Versuche sind in Tabelle 3 dargestellt.

**Tabelle 3**

| **Eigenschaften aus Reifenversuch** | **1(V)** | **2(V)** | **3(V)** | **4(V)** | **5(V)** | **6(E)** |
|---|---|---|---|---|---|---|
| Nassbremsen mit ABS auf Asphalt | 100 | 102 | 99 | 100 | 101 | 101 |
| Nassbremsen mit ABS auf Beton | 100 | 100 | 98 | 99 | 98 | 101 |
| Trockenbremsen | 100 | 100 | 95 | 101 | 94 | 102 |
| Eisbremsen (Halle) | 100 | 96 | 100 | 94 | 102 | 102 |
| Schneetraktion | 100 | 95 | 99 | 96 | 101 | 101 |
| Abrieb | 100 | 105 | 110 | 123 | 109 | 124 |

Der Tabelle 3 kann man entnehmen, dass erst durch die spezielle Kombination von flüssigem Polybutadien mit Hochstrukturruß und Rapsöl in einer kieselsäurehaltigen Dienkautschukmischung Reifen erhalten werden können, die sich durch gutes Bremsverhalten auf nasser, trockener, eisiger und schneeiger Fahrbahn bei besonders geringem Abrieb, d. h. bei einem sehr guten Abriebverhalten, auszeichnen. Obwohl die Mischung 6 flüssiges Polybutadien enthält, zeigt sie nicht die Verschlechterung des Trockenbremsens, wie sie beispielsweise in Mischung 5 sichtbar wird. Insbesondere das gute Verhalten beim Trockenbremsen und in den Wintereigenschaften war ausgehend von den Einzeleffekten der verschiedenen Substanzen nicht zu erwarten.

## Patentansprüche

1. Schwefelvernetzbare Kautschukmischung, insbesondere für Laufstreifen von Reifen, enthaltend
- zumindest einen Dienkautschuk,
- flüssiges Polybutadien mit einem Molekulargewicht von 1500 - 10000 g/mol und einem Vinylgehalt von 15 - 50 %,
- zumindest einen polaren Füllstoff,
- zumindest einen Hochstrukturruß mit einer Iodadsorptionszahl von 115 - 200 g/kg und einer DBP-Zahl von 125 - 160 mL/100 g und
- zumindest ein Glycerid und/oder ein Faktis.

2. Kautschukmischung nach Anspruch 1, **dadurch gekennzeichnet, dass** der bzw. die Dienkautschuk(e) ausgewählt sind aus der Gruppe bestehend aus Naturkautschuk, synthetischem Polyisopren, Polybutadien und Styrol-Butadien-Copolymer.

3. Kautschukmischung nach Anspruch 1 oder 2, **dadurch gekennzeichnet, dass** das flüssige Polybutadien ein Molekulargewicht von 2000 - 5000 g/mol und einen Vinylgehalt von 20 - 35 % aufweist.

4. Kautschukmischung nach zumindest einem der vorhergehenden Ansprüche, **dadurch gekennzeichnet, dass** sie 10 - 50 Gewichtsteile flüssiges Polybutadien pro 100 Gewichtsteile des bzw. der Dienkautschuk(e), ausgewählt aus der Gruppe bestehend aus Naturkautschuk, synthetischem Polyisopren, Polybutadien und Styrol-Butadien-Copolymer, enthält.

5. Kautschukmischung nach zumindest einem der vorhergehenden Ansprüche, **dadurch gekennzeichnet, dass** sie als polaren Füllstoff Kieselsäure enthält und das Gewichtsverhältnis von Kieselsäure zu Hochstrukturruß in der Mischung 10:1 bis 1:2 beträgt.

6. Kautschukmischung nach zumindest einem der vorhergehenden Ansprüche, **dadurch gekennzeichnet, dass** sie 10 - 70 Gewichtsteile Hochstrukturruß pro 100 Gewichtsteile des bzw. der Dienkautschuk(e), ausgewählt aus der Gruppe bestehend aus Naturkautschuk, synthetischem Polyisopren, Polybutadien und Styrol-Butadien-Copolymer, enthält.

7. Kautschukmischung nach zumindest einem der vorhergehenden Ansprüche, **dadurch gekennzeichnet, dass** sie als Glycerid Rapsöl in einer Menge von 5 - 10 Gewichtsteilen pro 100 Gewichtsteile des bzw. der Dienkautschuk(e), ausgewählt aus der Gruppe bestehend aus Naturkautschuk, synthetischem Polyisopren, Polybutadien und Styrol-Butadien-Copolymer, enthält.

8. Kautschukmischung nach zumindest einem der vorhergehenden Ansprüche, **dadurch gekennzeichnet, dass** sie
- 10 - 80 Gewichtsteile Naturkautschuk,
- 0 - 70 Gewichtsteile Polybutadien,
- 0 - 80 Gewichtsteile lösungspolymerisiertes Styrol-Butadien-Copolymer,
- 10 - 50 Gewichtsteile flüssiges Polybutadien,
- 20 - 110 Gewichtsteile Kieselsäure,
- 10 - 70 Gewichtsteile Hochstrukturruß und
- 5 - 20 Gewichtsteile Rapsöl enthält,
wobei sich die Gewichtsteile von Naturkautschuk, Polybutadien und lösungspolymerisiertem Styrol-Butadien-Copolymer zu 100 addieren.

9. Reifen, dessen mit der Fahrbahn in Berührung kommender Teil des Laufstreifens zumindest zum Teil aus einer mit Schwefel vulkanisierten Kautschukmischung nach zumindest einem der Ansprüche 1 bis 8 besteht.

## Claims

1. Sulphur-vulcanizable rubber blend, in particular for tyre treads, comprising
- at least one diene rubber,
- liquid polybutadiene having a molecular weight of 1500-10 000 g/mol and a vinyl content of 15-50%,
- at least one polar filler,
- at least one highly structured carbon black having an iodine adsorption number of 115-200 g/kg and a DBP number of 125-160 ml/100 g and
- at least one glyceride and/or one factice.

2. Rubber blend according to Claim 1, **characterized in that** the diene rubber or rubbers is or are selected from the group consisting of natural rubber, synthetic polyisoprene, polybutadiene and styrene/butadiene copolymer.

3. Rubber blend according to Claim 1 or 2, **characterized in that** the liquid polybutadiene has a molecular weight of 2000-5000 g/mol and a vinyl content of 20-35%.

4. Rubber blend according to at least one of the preceding claims, **characterized in that** it contains 10-50 parts by weight of liquid polybutadiene per 100 parts by weight of the diene rubber or rubbers, selected from the group consisting of natural rubber, synthetic polyisoprene, polybutadiene and styrene/butadiene copolymer.

5. Rubber blend according to at least one of the preceding claims **characterized in that** it contains silica as polar filler and the weight ratio of silica to highly structured carbon black in the mixture is from 10:1 to 1:2.

6. Rubber blend according to at least one of the preceding claims **characterized in that** it contains 10-70-parts by weight of highly structured carbon black per 100 parts by weight of the diene rubber or rubbers, selected from the group consisting of natural rubber, synthetic polyisoprene, polybutadiene and styrene/butadiene copolymer.

7. Rubber blend according to at least one of the preceding claims, **characterized in that** it contains, as the glyceride, rapeseed oil in an amount of 5-10 parts by weight per 100 parts by weight of the diene rubber or rubbers selected from the group consisting of natural rubber, synthetic polyisoprene, polybutadiene and styrene/butadiene copolymer.

8. Rubber blend according to at least one of the preceding claims, **characterized in that** it contains
- 10-80 parts by weight of natural rubber,
- 0-70 parts by weight of polybutadiene,
- 0-80 parts by weight of solution-polymerized styrene/butadiene copolymer,
- 10-50 parts by weight of liquid polybutadiene,
- 20-110 parts by weight of silica,
- 10-70 parts by weight of highly structured carbon black and
- 5-20 parts by weight of rapeseed oil,
the parts by weight of natural rubber, polybutadiene and solution-polymerized styrene/butadiene copolymer summing to 100.

9. Tyres whose tread part which comes into contact with the carriageway at least partly comprises a sulphur-vulcanized rubber blend according to at least one of Claims 1 to 8.

## Revendications

1. Composition de caoutchouc réticulable au soufre, en particulier pour bandes de roulement de pneumatiques, contenant
- au moins un caoutchouc diène,
- du polybutadiène liquide ayant une masse moléculaire de 1 500 - 10 000 g/mole et une teneur en vinyle de 15 - 50 %,
- au moins une charge polaire,
- au moins un noir de carbone fortement texturé ayant un indice d'absorption d'iode de 115 - 200 g/kg et un indice DBP (indice d'absorption de phtalate de dibutyle) de 125-160 ml/100 g et
- au moins un glycéride et/ou un factice.

2. Composition de caoutchouc selon la revendication 1, **caractérisée en ce que** le ou les caoutchouc(s) diène sont choisis dans le groupe consistant en le caoutchouc naturel, le polyisoprène synthétique, le polybutadiène et un copolymère styrène-butadiène.

3. Composition de caoutchouc selon la revendication 1 ou 2, **caractérisée en ce que** le polybutadiène liquide a une masse moléculaire de 2 000 - 5 000 g/mole et une teneur en vinyle de 20-35 %.

4. Composition de caoutchouc selon au moins l'une des revendications précédentes, **caractérisée en ce qu'**elle contient 10-50 parties en poids de polybutadiène liquide pour 100 parties en poids du ou des caoutchouc(s) diène choisis dans le groupe consistant en le caoutchouc naturel, le polyisoprène synthétique, le polybutadiène et un copolymère styrène-butadiène.

5. Composition de caoutchouc selon au moins l'une des revendications précédentes, **caractérisée en ce qu'**elle contient en tant que charge polaire de l'acide silicique et le rapport pondéral de l'acide silicique au noir de carbone hautement texturé dans la composition va de 10:1 à 1:2.

6. Composition de caoutchouc selon au moins l'une des revendications précédentes, **caractérisée en ce qu'**elle contient 10-70 parties en poids de noir de carbone hautement texturé pour 100 parties en poids du ou des caoutchouc (s) diène choisis dans le groupe consistant en le caoutchouc naturel, le polyisoprène synthétique, le polybutadiène et un copolymère styrène-butadiène.

7. Composition de caoutchouc selon au moins l'une des revendications précédentes, **caractérisée en ce qu'**elle contient en tant que glycéride de l'huile de colza en une quantité de 5-10 parties en poids pour 100 parties en poids du ou des caoutchouc(s) diène choisis dans le groupe consistant en le caoutchouc naturel, le polyisoprène synthétique, le polybutadiène et un copolymère styrène-butadiène.

8. Composition de caoutchouc selon au moins l'une des revendications précédentes, **caractérisée en ce qu'**elle contient
- 10-80 parties en poids de caoutchouc naturel,
- 0-70 parties en poids de polybutadiène,
- 0-80 parties en poids de copolymère styrène-butadiène polymérisé en solution,
- 10-50 parties en poids de polybutadiène liquide,
- 20-110 parties en poids d'acide silicique,
- 10-70 parties en poids de noir de carbone hautement texturé,
- 5-20 parties en poids d'huile de colza,
la somme des parties en poids de caoutchouc naturel, polybutadiène et copolymère styrène-butadiène polymérisé en solution étant égale à 100.

9. Pneumatiques, dont la partie de la bande de roulement entrant en contact avec la chaussée consiste au moins en partie en une composition de caoutchouc vulcanisée au soufre selon au moins l'une des revendications 1 à 8.
